Europäisches Patentamt

European Patent Office

Office européen des brevets

(11) Veröffentlichungsnummer: **0 073 314
B1**

(19)

(12) **EUROPÄISCHE PATENTSCHRIFT**

(45) Veröffentlichungstag der Patentschrift:
**08.01.86**

(21) Anmeldenummer: **82105675.1**

(22) Anmeldetag: **26.06.82**

(51) Int. Cl.⁴: **H 04 B 9/00**

(54) **Übertragungssystem für die vielfach-bidirektionale Ausnutzung einer Lichtwellenleiter-Ader.**

(30) Priorität: **29.08.81 DE 3134250**

(43) Veröffentlichungstag der Anmeldung:
**09.03.83 Patentblatt 83/10**

(45) Bekanntmachung des Hinweises auf die Patenterteilung:
**08.01.86 Patentblatt 86/2**

(84) Benannte Vertragsstaaten:
**AT CH LI NL**

(56) Entgegenhaltungen:
**EP - A - 0 040 706
EP - A - 0 051 727
DE - A - 2 933 245
US - A - 4 153 330
US - A - 4 232 385
US - A - 4 244 045
US - A - 4 265 511**

(73) Patentinhaber: **Philips Kommunikations Industrie AG,
Thurn-und-Taxis-Strasse 10, D-8500 Nürnberg 10 (DE)**

(72) Erfinder: **Nicia, Antonius, Kruburg 42, Eindhoven (NL)**
Erfinder: **Rittich, Dieter, Schubertstrasse 4,
D-5060 Bergisch Gladbach 1 (DE)**

(74) Vertreter: **Patentanwälte Dr. Solf & Zapf,
Schlossbleiche 20 Postfach 13 01 13,
D-5600 Wuppertal 1 (DE)**

## Beschreibung

Die Erfindung betrifft ein Übertragungssystem für die vielfach-bidirektionale Ausnutzung einer Lichtwellenleiter-Ader im Wellenlängen-Multiplex mit mehreren Lichtquellen, die in wenigstens zwei verschiedenen Wellenbereichen liegen, mit einer der Zahl der Lichtquellen entsprechenden Anzahl breitbandiger Lichtempfänger, die jeweils über wellenlängenabhängige Koppelanordnungen bzw. über Auskoppelanordnungen mit der bidirektional ausgenutzten Lichtwellenleiter-Ader verbunden sind.

Bei Systemen zur optischen Signalübertragung über Lichtwellenleiter, insbesondere wenn sie Entfernungen von mehreren Kilometern überbrücken sollen, fallen trotz der erheblichen Vorteile von Lichtwellenleiter-(LWL)-Kabeln gegenüber herkömmlichen elektrischen Nachrichtenkabeln die Kosten der Kabelstrecke erheblich ins Gewicht. Es besteht daher das Bedürfnis, jede LWL-Ader eines Kabels mit möglichst vielen verschiedenen Nachrichtenkanälen zu belegen.

Aus der DE-AL-2 933 245 ist ein Übertragungssystem der eingangs genannten Art bekannt, bei dem ein Lichtwellenleiter bidirektional ausgenutzt wird. Das bekannte System weist eine Lichtquelle auf, die über eine wellenlängenabhängige Koppelanordnung an einen optischen Richtungskoppler angeschlossen ist, der ausgangsseitig mit dem bidirektional ausgenutzten Lichtwellenleiter in Verbindung steht. Am anderen Ende des Lichtwellenleiters ist wiederum ein Richtungskoppler angeordnet, der mit einer wellenlängenabhängigen Koppelanordnung in Verbindung steht, die ausgangsseitig zu einem Lichtempfänger führt. Die gleiche Anordnung aus Lichtquelle, zwei wellenlängenabhängigen Koppelanordnungen und Lichtempfänger ist nochmals in Gegenrichtung des Lichtwellenleiters vorhanden, wobei die Richtungskoppler als Lichtverzweigungen dienen und jeweils eine 3dB-Dämpfung der übertragenen Lichtsignale bewirken. Der bidirektional nutzbare Lichtwellenleiter wird jeweils nur in einer der beiden Richtungen von einem eine bestimmte Wellenlänge aufweisenden Lichtsignal der entsprechenden Lichtquelle beaufschlagt. Lichtsignale von mehreren Lichtquellen in beiden Richtungen über den bidirektional ausnutzbaren Lichtwellenleiter zu schicken ist bei diesem bekannten System nicht möglich. Somit ist die Anzahl der Übertragungskanäle sehr gering.

Aus der US-A-4 244 045 ist ein Übertragungssystem bekannt, mit dem von einer Vielzahl von Lichtquellen über einen einzigen Lichtwellenleiter Lichtsignale unterschiedlicher Wellenlänge übertragen werden können und am Ende der Lichtwellenleitung diese einzelnen Lichtsignale wiederum ausgekoppelt und auf separate Empfänger geleitet werden. Die einzelnen Lichtquellen sind an einen optischen Multiplexer angeschlossen, der fensterselektiv und wellenlängenabhängig arbeitet. Ausgangsseitig ist der Multiplexer über einen Lichtwellenleiter an einen optischen Demultiplexer angeschlossen, der die übertragenen Lichtsignale fensterselektiv und wellenlängenabhängig auskoppelt und der Anzahl der Lichtquellen entsprechenden Lichtempfänger zuführt. Das bekannte System ermöglicht eine Lichtsignalübertragung nur in einer Richtung des Lichtwellenleiters, so dass eine bidirektionale Ausnutzung nicht erfolgen kann.

Der Erfindung liegt die Aufgabe zugrunde, ein Übertragungssystem der eingangs genannten Art zu schaffen, mit dem äusserst verlustarm möglichst viele Kanäle auf einer Lichtwellenleitung bidirektional übertragen werden können.

Diese Aufgabe wird erfindungsgemäss dadurch gelöst, dass die Lichtquellen jeweils eines bestimmten Wellenlängenbereichs über eine nichtselektive, wellenlängenunabhängige, als Lichtleiterverzweigung ausgebildete Koppelanordnung gemeinsam an einen ersten Lichtwellenleiter angeschlossen sind, der jeweils über die fensterselektive, wellenlängenabhängige Koppelvorrichtung mit der zweiten, bidirektional ausnutzbaren Lichtwellenleiter-Ader verbunden ist, an deren anderen Ende eine weitere, an die andere angepasste, fensterselektive, wellenlängenabhängige Koppelvorrichtung angeschlossen ist, an der dem jeweiligen Fenster zugeordneten Ausgang eine wellenlängenabhängige Auskoppelvorrichtung angeschlossen ist, an deren den einzelnen Lichtquellenwellenlängen zugeordneten Ausgängen die diesen zugeordneten Empfänger angeschlossen sind. Durch den Anschluss mehrerer Lichtquellen (Sender) eines Wellenlängenbereiches über die nichtselektive, wellenlängenunabhängige, als Lichtleiterverzweigung ausgebildete Koppelanordnung an den gemeinsamen, ersten Lichtwellenleiter wird eine Vielzahl von Sendereinheiten geschaffen. Je nach Anzahl der eingesetzten Lichtquellen besteht eine entsprechende Anzahl von voneinander unabhängigen Sendemöglichkeiten. Die Zusammenfassung der Vielzahl der Lichtquellen mittels der Koppelanordnung zu nur einem, nämlich dem ersten Lichtwellenleiter, führt dazu, dass über die nachgeschaltete, fensterselektive, wellenlängenabhängige Koppelvorrichtung, die mit dem bidirektional ausnutzbaren Lichtwellenleiter verbunden ist, nur eine Lichtwellenleiter-Ader zwischen Sende- und Empfangsstation verlegt zu werden braucht, obwohl eine Vielzahl von Übertragungskanälen besteht. Die am anderen Ende der bidirektional ausnutzbaren Lichtwellenleiter-Ader angeschlossene fensterselektive, wellenlängenabhängige Koppelvorrichtung nimmt eine wellenlängenbereichsmässige Auskopplung vor und der so ausgekoppelte Wellenlängenbereich der Lichtsignale wird der wellenlängenabhängigen Auskoppelvorrichtung zugeführt, die entsprechend der Wellenlänge und Anzahl der Lichtquellen Signale auskoppelt, die einer entsprechenden Anzahl von Empfängern zugeführt werden. Jedem Sender ist somit ein entsprechender Empfänger zugeordnet und die Anzahl der Sender-Empfänger-Einheiten entspricht der Anzahl der Übertragungskanäle, wobei beidseitig an der bidirektional ausnutzbaren Lichtwellenleiter-Ader jeweils eine bestimmte Anzahl von Sendern als auch Empfängern angeschlossen ist, so dass eine Vielzahl von Kommunikationsverbindungen geschaffen wird. Aufgrund des erfindungsgemässen Aufbaus zeichnet sich das so geschaffene System durch eine äusserst geringe Dämpfung aus und ermöglicht somit einen verlustarmen Betrieb.

In einer bevorzugten Ausgestaltung der Erfindung wird als fensterselektive Koppelanordnung eine Anordnung verwendet, bei der zwischen zwei Kugellinsen ein gegen die optische Achse geneigter Spiegel angeordnet ist, der für die Lichtstrahlen eines der verwendeten Wellenbereiche durchlässig, für die Lichtstrahlen des anderen verwendeten Wellenbereichs aber reflektierend ist. Diese Ausgestaltung ist erprobt, zuverlässig und leicht montierbar. Die Herstellung der dafür benötigten Spiegel durch Aufbringen dünner Schichten auf plane Glasplatten wird gut beherrscht und ergibt Bauteile mit sehr geringer Dämpfung.

In einer weiteren Ausgestaltung der Erfindung wird als selektive Auskoppelanordnung eine Vorrichtung zum Auskoppeln von optischen Signalen verschiedener Wellenlängen aus einem Lichtwellenleiter in mehrere getrennte Lichtwellenleiter verwendet, in der ein reflektierendes Beugungsgitter geneigt gegen die optische Achse des Strahlenganges und in dem zwischen den Endflächen der Lichtwellenleiter und dem Beugungsgitter eine Kugellinse angeordnet ist. Diese Ausgestaltung zeigt ausgezeichnete Werte in bezug auf Dämpfung, Trennschärfe und Nebensprechdämpfung.

Ferner ist in einer weiteren Ausgestaltung der Erfindung vor jedem Lichtempfänger ein regelbares Licht-Dämpfungsglied angeordnet, in dem im Strahlengang zwischen zwei Kugellinsen ein fein einstellbarer Dämpfungskörper angebracht ist. Mit dieser Ausgestaltung ist es möglich, jeden einzelnen Lichtempfänger an die Dämpfungswerte der Gesamt-Übertragungsanlage anzupassen und damit sowohl Übersteuerungen der Empfänger zu vermeiden wie auch die günstigsten Signal/Rauschverhältnisse am Ausgang eines jeden Empfängers einzustellen.

Alternativ kann bei der letztgenannten Ausgestaltung der Dämpfungskörper als ein an seinem in den Strahlengang ragenden Ende angespitzter oder abgerundeter Stift oder ein einstellbares Graufilter verwendet werden. Die erstgenannte Ausführungsform ist besonders preisgünstig, die zuletzt genannte Ausführungsform ermöglicht einen besonders weiten Regelbereich.

In einer weiteren Ausgestaltung der Erfindung werden die Lichtempfänger in einem Steckerstift mit Kugellinsen angeordnet.

Diese oben genannten Ausgestaltungen bieten den Vorteil, dass jeder Sender und jeder Empfänger für sich einfach auswechselbar ist und weitere Steck- oder sonstige Verbindungen vermieden werden können. Auf diese Weise wird die Gesamtdämpfung des Übertragungssystems weiterhin vermindert.

Ausführungsbeispiele der Erfindung sind in der Zeichnung dargestellt und werden im nachfolgenden ausführlich beschrieben. Es zeigen:

Fig. 1 das Schema einer Übertragungsanlage für optische Signale mit einer LWL-Ader, bei der in jeder Richtung 4 getrennte Kanäle übertragen werden können,

Fig. 2 eine LWL-Verzweigung mit 4 abzweigenden LWL, deren Kerndurchmesser kleiner ist als der Kerndurchmesser der gemeinsamen LWL,

Fig. 3 eine schematische Darstellung einer fensterselektiven Koppelanordnung,

Fig. 4 eine schematische Darstellung einer selektiven Auskoppelanordnung,

Fig. 5 ein Dämpfungsglied mit zwei Kugellinsen-Steckern und einem Stift im Strahlengang,

Fig. 6 ein Dämpfungsglied mit zwei Kugellinsen-Steckern und einem einstellbaren Graufilter im Strahlengang,

Fig. 7 die schematische Darstellung einer optischen Übertragungsanlage, bei der in einer Richtung 4 getrennte Kanäle, in der Gegenrichtung ein weiterer Kanal übertragen werden kann.

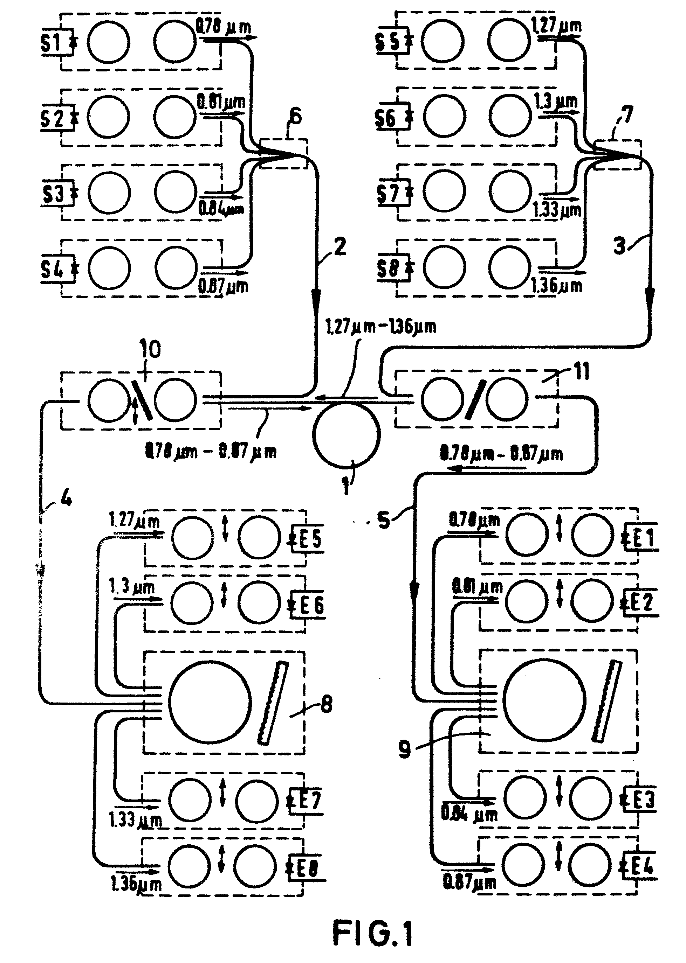

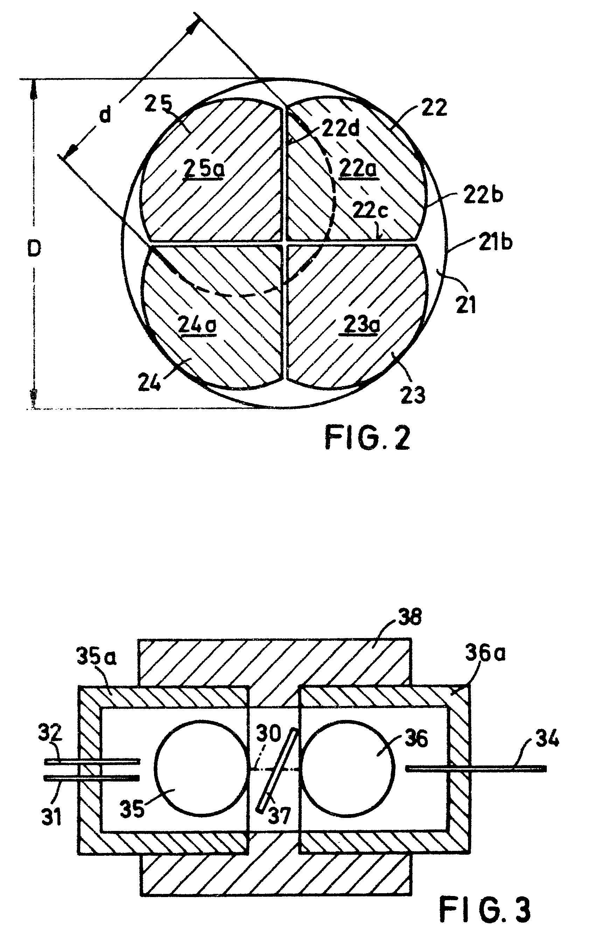

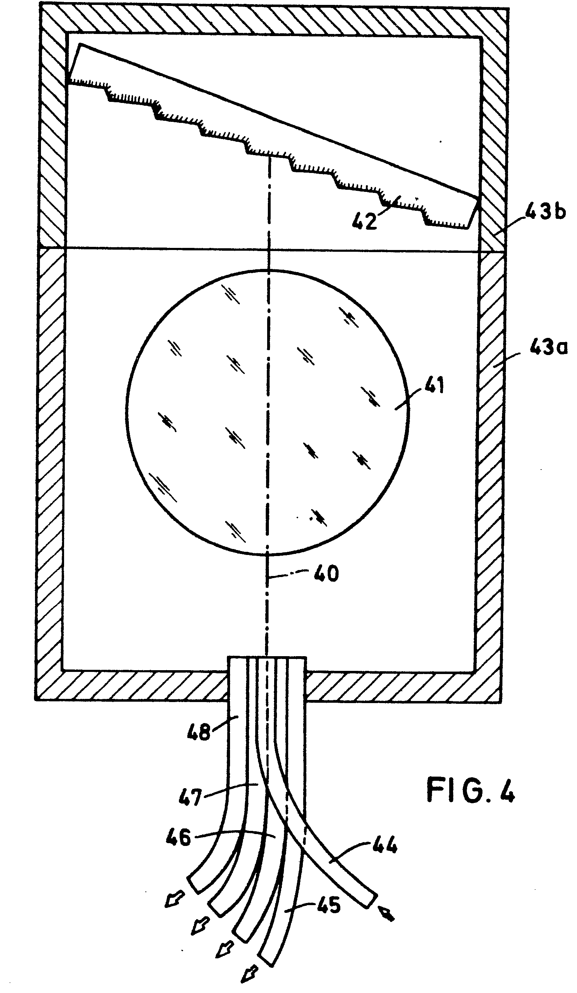

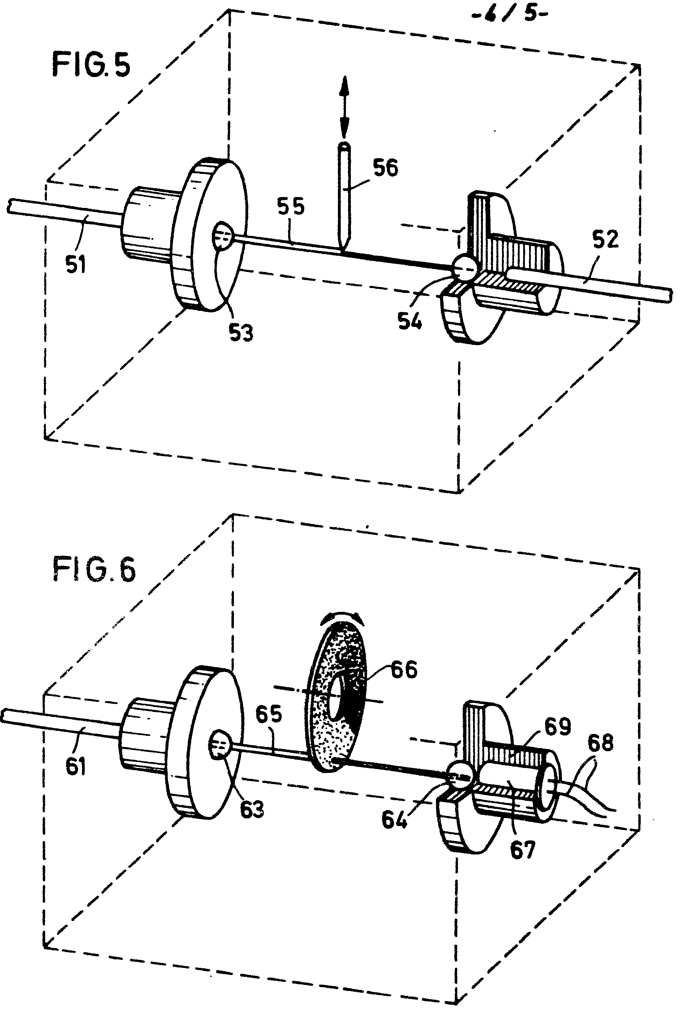

In Fig. 1 ist die zwei getrennte Stationen verbindende LWL-Ader mit 1 bezeichnet. Die erste, in der Figur links dargestellte Station weist 4 Lichtquellen oder Lichtsender S1–S4 auf, welche Licht mit verschiedenen Wellenlängen aussenden. Die in der Figur bezeichneten Wellenlängen sind lediglich Beispiele für verwendbare Wellenlängen und ihre Abstände voneinander, wie sie mit den weiterhin beschriebenen Bauteilen beherrscht werden können. Angedeutet ist auch, wie die Lichtquellen S1–S4 über Verbinder mit zwei Kugellinsen, die steckbar ausgeführt sein können, mit LWL, die vorzugsweise als Monomode-LWL ausgeführt sind, verbunden sind. Die von den Lichtquellen S1–S4 kommenden LWL sind über eine nichtselektive Koppelanordnung 6 mit einem gemeinsamen LWL 2, der vorzugsweise als Gradientenfaser ausgeführt ist, verbunden. Die nichtselektive Koppelanordnung 6 ist vorzugsweise, wie in der Figur angedeutet, eine Lichtleiterverzweigung, wie sie in Fig. 2 etwas ausführlicher dargestellt ist. Der von den Lichtquellen S1–S4 kommende gemeinsame LWL 2 ist über eine fensterselektive Koppelanordnung 10 mit der LWL-Ader 1 verbunden. Ein Ausführungsbeispiel für die Koppelanordnung 10 ist in Fig. 3 ausführlicher dargestellt. Der in der Koppelanordnung 10 befindliche Spiegel ist so ausgeführt, dass er für Licht mit den Wellenlängen der Lichtquellen S1–S4 reflektierend wirkt. Dieses Licht aus dem gemeinsamen LWL 2 wird also in die LWL-Ader 1 eingekoppelt, zu der auf der rechten Seite der Figur angedeuteten zweiten Station geleitet, und tritt dort in die fensterselektive Koppelanordnung 11 ein. Deren Spiegel ist so gestaltet, dass er für die genannten Wellenlängen durchlässig ist. Dieses Licht wird also in den gemeinsamen LWL 5 geleitet und gelangt zur selektiven Auskoppelanordnung 9. Eine solche Auskoppelanordnung ist in Fig. 4 ausführlicher beschrieben. Das schräggestellte Beugungsgitter in der Auskoppelanordnung 9 verteilt das über den gemeinsamen LWL 5 kommende Licht wellenlängenabhängig auf die Einzel-LWL, die zu den Lichtempfängern E1–E4 führen. Es ist wiederum angedeutet, dass die Lichtempfänger E1–E4 über Verbindungsanordnungen mit zwei Kugellinsen mit den dazugehörigen Einzel-LWL verbunden sind. Durch einen Doppelpfeil ist ferner angedeutet, dass diese Verbindung, die vorteilhafterweise ebenfalls steckbar ausgeführt werden kann, ein Dämpfungsglied enthält, wie es in den Figuren 5 und 6 ausführlicher dargestellt ist.

Die Signalübertragung in Gegenrichtung von der zweiten, auf der rechten Seite der Figur dargestellten Station zur ersten, auf der linken Seite der Figur dargestellten Station erfolgt in der gleichen Weise durch die vier Lichtquellen S5–S8, die über die nichtselektive Koppelanordnung 7 mit dem gemeinsamen LWL 3 verbunden sind, welcher wiederum über die fensterselektive Koppelanordnung 11 mit der LWL-Ader 1 verbunden ist. Diese Koppelanordnung 11 ist im Gegensatz zur Koppelanordnung 10 so ausgeführt, dass der in ihr befindliche Spiegel für die längeren Wellenlängen der Sender S5–S8 reflektierend ist. Diese Ausgestaltung ergibt ein günstigeres Signal/Rausch-Verhältnis, als wenn an dieser Stelle die gleiche Koppelanordnung 10 verwendet würde. In der auf der linken Seite dargestellten ersten Station ist der in der Koppelanordnung 10 befindliche Spiegel für die Wellenlängen der Sender S5–S8 durchlässig und verbindet somit die LWL-Ader 1 mit dem gemeinsamen LWL 4, dessen Licht über die selektive Koppelanordnung 8 wiederum auf die zugehörigen Lichtempfänger E5–E8 verteilt wird. Es hat sich gezeigt, dass die systembedingte Lichtdämpfung, also ohne Berücksichtigung der Dämpfung der LWL-Ader 1, von einem der Sender S1–S8 zu seinem dazugehörigen Empfänger E1–E8 zwischen drei und vier dB beträgt. Das ist für ein Übertragungssystem dieser Grössenordnung ein überraschend geringer Dämpfungswert.

In Fig. 2 ist eine LWL-Verzweigung, wie sie als nichtselektive Koppelanordnung 6 oder 7 in Fig. 1 vorteilhaft verwendet wird, schematisch dargestellt. Der gemeinsame LWL 21 hat den Kerndurchmesser D. Die Begrenzung des Kerns ist mit 21b bezeichnet. Auf die sichtbare Endfläche des gemeinsamen LWL 21 sind die Endflächen 22a, 23a, 24a und 25a der abzweigenden LWL 22, 23, 24 und 25 aufgeklebt. In diesem gewählten Beispiel erfüllt der Kerndurchmesser d der abzweigenden LWL 22 bis 25 zwar die Bedingung, dass er kleiner ist als der Kerndurchmesser D des gemeinsamen LWL 21, er ist aber noch so gross, dass die Enden der abzweigenden LWL 22 bis 25 durch je zwei rechtwinkelig zueinander angeordnete Flächen, beispielsweise 22c und 22d so weit abgearbeitet werden müssen, dass die Kernrändern, beispielsweise 22b, den Kernrand 21b nicht überragen. Dieses Beispiel entspricht etwa den Verhältnissen, wenn die abzweigenden LWL 22 bis 25 ebenfalls Gradientenfasern sind. Werden an dieser Stelle Monomode-Fasern verwendet, deren Kerndurchmesser meist wesentlich kleiner ist als der von Gradientenfasern, kann das Abarbeiten der Enden der abzweigenden LWL ganz oder teilweise entfallen. Dadurch wird die systembedingte Lichtdämpfung einer solchen LWL-Verzweigung weiterhin vermindert.

In Fig. 3 ist eine fensterselektive Koppelanordnung, wie sie in Fig. 1 mit 10 und 11 bezeichnet sind, schematisch dargestellt. Die LWL-Ader ist hier mit 31 bezeichnet, der von den Sendern kommende gemeinsame LWL mit 32. Beide sind gemeinsam in einem Steckerstift 35a befestigt, der vor der Lichtaustrittsöffnung eine Kugellinse 35 trägt. Entsprechend ist der zu den Empfängern gehende gemeinsame LWL mit 34 bezeichnet, der in einem Steckerstift 36a vor einer Kugellinse 36 befestigt ist. Die Steckerstifte 35a und 36a sind in eine Verbindungshülse 38 aufeinander ausgerichtet eingesetzt. Im Strahlengang 30 ist ein Spiegel 37 angebracht, der für das aus der LWL-Ader 31 kommende Licht durchlässig ist. Das von den Sendern über den gemeinsamen LWL 32 kommende Licht, dessen Wellenlängen in einem anderen Bereich liegen, wird dagegen vom Spiegel 37 reflektiert und und über die Kugellinse 35 in die LWL-Ader 31 geleitet. Diese gewünschte Spiegeleigenschaft lässt sich durch das Aufbringen dünner Schichten, beispielsweise durch Aufdampfen, auf eine plane Glasplatte gezielt erreichen. Die Lichtverluste sowohl beim Durchgang durch den Spiegel als auch bei der Reflexion am Spiegel liegen in der Grössenordnung von 0,7 bis 0,8 dB.

In Fig. 4 ist eine selektive Auskoppelanordnung, wie sie in Fig. 1 mit 8 und 9 bezeichnet ist, ausführlicher dargestellt. Die Enden des gemeinsamen LWL 44 und der zu den Empfängern gehenden Einzel-LWL 45, 46, 47 und 48 sind in einem, vorteilhafterweise steckbarem Stift 43a befestigt. Vor den Endflächen der LWL 44 bis 48 ist auf der gemeinsamen optischen Achse 40 eine Kugellinse 41 angeordnet. Im Gegenstecker 43b ist, geneigt zur optischen Achse 40, ein reflektierendes Beugungsgitter 42 angeordnet. Das aus dem gemeinsamen LWL 44 kommende Licht wird hier wellenlängenabhängig in verschiedenen Winkeln reflektiert und trifft wiederum durch die Kugellinse 41 auf die Endflächen der abgehenden LWL 45 bis 48. Die Lichtdämpfung eines solchen Demultiplexers ist kleiner als 3 dB, wobei eine Übersprechdämpfung zwischen den einzelnen Signalen von mehr als 25 dB erreicht wird.

In Fig. 5 ist ein Dämpfungsglied für in LWL 51 und 52 geführte Lichtsignale schematisch dargestellt. Die LWL 51 und 52 sind wiederum in Steckerstifte gefasst, in die jeweils eine Kugellinse 53 und 54 eingesetzt sind. Im Strahlengang 55 zwischen den beiden Kugellinsen 53 und 54 ist ein Stift 56 fein verschiebbar angeordnet, der je nach seiner Stellung den Strahlengang 55 ganz oder teilweise unterbricht. Eine verbesserte Einstellbarkeit wird noch dadurch erreicht, dass das in den Strahlengang 55 ragende Ende des Stiftes 56 angespitzt oder abgerundet ausgeführt wird.

In Fig. 6 ist eine andere Ausgestaltung eines Dämpfungsgliedes schematisch dargestellt. Der LWL 61 ist in einem Steckerstift mit Kugellinse 63 gefasst. Ihm gegenüber ist, ebenfalls in einem Steckerstift 69 mit Kugellinsen 64 gefasst, ein Lichtsender oder Lichtempfänger 67 angeordnet. Seine elektrischen Anschlussenden sind mit 68 bezeichnet. Im Strahlengang 65 ist hier eine Scheibe 66 drehbar angeordnet, die als Graukeil ausgeführt ist. Durch Drehung der Scheibe 66 um ihre angedeutete Achse lässt sich die Dämpfung des durchgehenden Lichtes feinfühlig einstellen. Dämpfungsglieder der beschriebenen Art werden in einem Übertragungssystem zweckmässigerweise vor jedem Lichtempfänger angeordnet, um diese an die Gesamtdämpfung des betreffenden Übertragungssystems anpassen zu können. Dadurch werden Störungen durch eine eventuelle Übersteuerung der Lichtempfänger vermieden und das Signal-Rauschverhältnis verbessert.

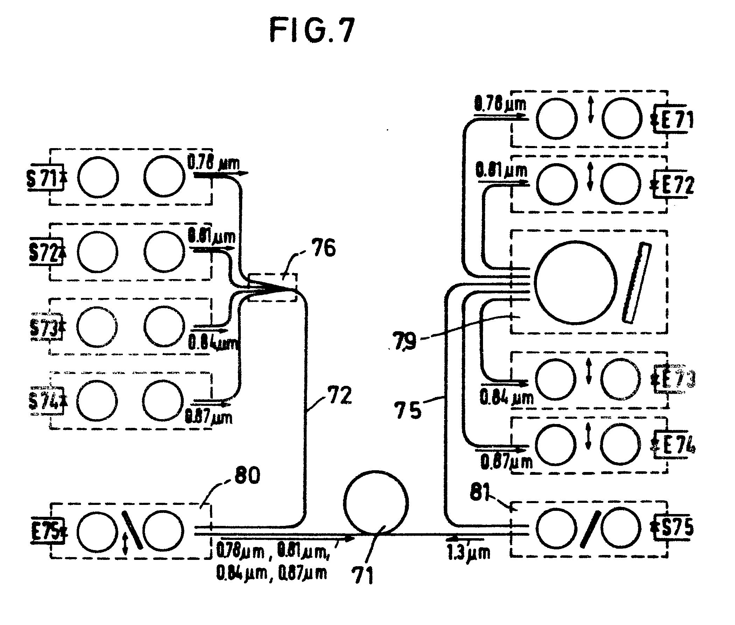

In Fig. 7 ist eine kleinere Übertragungsanlage für optische Signale dargestellt, welche die universelle Eignung der einzelnen Bauelemente für ein Baukastensystem erkennen lässt. Die in der linken Bildhälfte dargestellte erste Station ist mit der in der rechten Bildhälfte dargestellten zweiten Station durch die LWL-Ader 71 verbunden. Die Lichtsender S71, S72, S73 und S74 arbeiten wiederum auf verschiedenen Wellenlängen, ihr Licht wird wiederum über zwei Kugellinsen enthaltende Verbindungsanordnungen und Einzel-LWL über die nichtselektive Koppelanordnung 76 und den gemeinsamen LWL 72 zur fensterselektiven Koppelanordnung 80 geleitet und mit der LWL-Ader 71 verbunden. Das in der zweiten Station in der rechten Bildhälfte ankommende Licht der Sender S71 bis 74 wird in der fensterselektiven Ankoppelanordnung 81 reflektiert und gelangt über den gemeinsamen LWL 75 zur selektiven Auskoppelanordnung 79 und wird dort, wie bereits beschrieben auf die zugehörigen Empfänger E71, E72, E73 und E74 verteilt. Der Betrieb in Gegenrichtung erfolgt über den Sender S75 zum Empfänger E75, welche in diesem Fall unmittelbar, vorteilhafterweise wieder steckbar in einem Stecker mit Kugellinse angeordnet an den fensterselektiven Auskoppelanordnungen 80 und 81 angebracht sind. Es ist zu erkennen, dass hier gleiche Bauteile, wie sie in Fig. 1 benutzt werden, auch für andere Zusammenstellungen vorteilhaft verwendet werden können. Hier zeigt sich eine weitere vorteilhafte Anwendung für das an sich schon bekannte Prinzip der Verbindung zweier optischer Bauteile über zwei Kugellinsen.

## Patentansprüche

1. Übertragungssystem für die vielfach-bidirektionale Ausnutzung einer Lichtwellenleiter-Ader (1; 71) im Wellenlängen-Multiplex mit mehreren Lichtquellen, die in wenigstens zwei verschiedenen Wellenbereichen liegen, mit einer der Zahl der Lichtquellen entsprechenden Anzahl breitbandiger Lichtempfänger (E1–8; E71–75), die jeweils über wellenlängenabhängige Koppelanordnungen bzw. über Auskoppelanordnungen mit der bidirektional ausgenutzten Lichtwellenleiter-Ader verbunden sind, dadurch gekennzeichnet, dass die Lichtquellen (S1–S4; S5–S8; S71–S74) jeweils eines bestimmten Wellenlängenbereichs über eine nichtselektive, wellenlängenunabhängige als Lichtleiterverzweigung ausgebildete Koppelanordnung (6; 7; 76) gemeinsam an einen ersten Lichtwellenleiter (2; 3; 72) angeschlossen sind, der jeweils über die fensterselektive, wellenlängenabhängige Koppelvorrichtung (10; 11; 80) mit der zweiten, bidirektional ausnutzbaren Lichtwellenleiter-Ader (1; 71) verbunden ist, an deren anderen Ende eine weitere, an die andere angepasste, fensterselektive, wellenlängenabhängige Koppelvorrichtung (11; 10; 81) angeschlossen ist, an der dem jeweiligen Fenster zugeordneten Ausgang eine wellenlängenabhängige Auskoppelvorrichtung (9; 8; 79) angeschlossen ist, an deren den einzelnen Lichtquellenwellenlängen zugeordneten Ausgängen die diesen zugeordneten Empfänger (E1–E4; E5–E8; E71–E75) angeschlossen sind.

2. System nach Anspruch 1, dadurch gekennzeichnet, dass als fensterselektive Koppelanordnung (10 und 11, 80 und 81) eine Anordnung (Fig. 3) verwendet wird, bei der zwischen zwei Kugellinsen (35 und 36) ein gegen die optische Achse (30) geneigter Spiegel (37) angeordnet ist, der für die Lichtstrahlen eines der verwendeten Wellenbereiche durchlässig, für die Lichtstrahlen des anderen verwendeten Wellenbereichs aber reflektierend ist.

3. System nach Anspruch 1 oder 2, dadurch gekennzeichnet, dass als selektive Auskoppelanordnung (8 und 9, 79) eine Vorrichtung (Fig. 4) zum Auskoppeln von optischen Signalen verschiedener Wellenlängen aus einem Lichtwellenleiter (44) in mehrere getrennte Lichtwellenleiter (45–48) verwendet wird, in der ein reflektierendes Beugungsgitter (42) geneigt gegen die optische Achse des Strahlenganges (80) und in der zwischen den Enden der Lichtwellenleiter (40–48) und dem Beugungsgitter (42) eine Kugellinse (41) angeordnet ist.

4. System nach einem der Ansprüche 1 bis 3, dadurch gekennzeichnet, dass vor jedem Lichtempfänger (E1–E8 in Fig. 1, E71–E75 in Fig. 7) ein regelbares Licht-Dämpfungsglied (Fig. 5, Fig. 6) angeordnet wird, in dem im Strahlengang (55, 65) zwischen zwei Kugellinsen (53, 54) oder 63, 64) ein fein einstellbarer Dämpfungskörper (56, 66) angebracht ist.

5. System nach Anspruch 4, dadurch gekennzeichnet, dass der Dämpfungskörper als ein an seinem in den Strahlengang (55) ragenden Ende angespitzter oder abgerundeter Stift (56) ausgebildet wird.

6. System nach Anspruch 4, dadurch gekennzeichnet, dass der Dämpfungskörper als ein einstellbares Graufilter (66) ausgebildet wird.

7. System nach einem der Ansprüche 1 bis 6, dadurch gekennzeichnet, dass die Lichtempfänger (E1–8 in Fig. 1, 67 in Fig. 6, E71–75 in Fig. 7) jeweils in einem Steckerstift (69) befestigt werden, in dessen Lichtaustrittsöffnung eine Kugellinse (64) angeordnet wird.

8. System nach einem der Ansprüche 1 bis 7, dadurch gekennzeichnet dass die Lichtsender (S1–8 in Fig. 1, S71–75 in Fig. 7) in gleicher Weise wie die Lichtempfänger (67 in Fig. 6) in einem Steckerstift (69) mit Kugellinse (64) angeordnet werden.

## Revendications

1. Système de transmission pour l'utilisation multiple bidirectionnelle d'une fibre optique (1; 71) en multiplex de longueurs d'onde, muni de plusieurs sources de lumière situées dans au moins deux gammes d'ondes différentes, et d'un nombre de récepteurs de lumière à large bande (E1–8; E71–75) correspondant au nombre de sources lumineuses, sources et récepteurs de lumière qui, à travers des dispositifs de couplage dépendant de la longueur d'onde, respectivement des démultiplexeurs, sont reliés à la fibre optique utilisée de façon bidirectionnelle, caractérisé en ce que les sources lumineuses (S1–S4; S5–S8; S71–S74) situées chacune dans une gamme de longueurs d'onde déterminée sont raccordées en commun à une première fibre optique (2; 3; 72) à travers un dispositif de couplage non sélectif (6; 7; 76) indépendant de la longueur d'onde et réalisé sous la forme d'un branchement de fibres optiques, premièr fibre optique qui, à travers le dispositif de couplage (10; 11; 80) dépendant de la longueur d'onde est reliée à la deuxième fibre optique (1; 71) qui peut être utilisée de façon bidirectionnelle et à l'autre extrémité de laquelle est raccordé un autre dispositif de couplage (11; 10; 81) dépendant de la longueur d'onde et adapté au premier dispositif de couplage, alors qu'à la sortie de l'autre dispositif de couplage qui est attribuée à la gamme d'ondes concernée, est raccordé un démultiplexeur (9; 8; 79) dépendant de la longueur d'onde et que des récepteurs (E1–E4; E5–E8; E71–E75) attribués aux longueurs d'ondes individuelles sont raccordés aux sorties du démultiplexeur attribuées à ces longueurs d'onde.

2. Système selon la revendication 1, caractérisé en ce que comme dispositif de couplage dépendant de la longueur d'onde (10 et 11, 80 et 81) ou utilise un dispositif (figure 3) dans lequel un miroir (37) incliné par rapport à l'axe optique (30) est disposé entre deux lentilles sphériques (35 et 36), miroir qui laisse passer les faisceaux lumineux de l'une des gammes d'ondes utilisées et qui réfléchit les faisceaux lumineux de l'autre gamme d'ondes utilisée.

3. Système selon la revendication 1 ou 2, caractérisé en ce que comme démultiplexeur (8 et 9, 79), on utilise un dispositif (figure 3) servant à séparer des signaux optiques de longueurs d'ondes différentes provenant d'une seule fibre optique (44) pour les diriger vers plusieurs fibres optiques séparées (45–48), dispositif dans lequel est prévu un réseau réflecteur de diffraction (42) incliné par rapport à l'axe optique de l'itinéraire des faisceaux (80) et dans lequel, entre les extrémités des fibres optiques (40–48) et le réseau de diffraction (42), est disposée une lentille sphérique (41).

4. Système selon l'une des revendications 1 à 3, caractérisé en ce qu'avant chaque récepteur de lumière (E1–8 sur la figure 1, et E71–75 sur la figure 7), est disposé un organe (figure 5, figure 6) d'atténuation de la lumière comportant un corps d'atténuation (56, 66) à réglage fin disposé entre deux lentilles sphériques (53, 54 ou 63, 64) dans l'itinéraire des faisceaux (55, 65).

5. Système selon la revendication 4, caractérisé en ce que le corps d'atténuation est réalisée sous la forme d'une broche (56) pointue ou arrondie à son extrémité située dans l'itinéraire des faisceaux (55).

6. Système selon la revendication 4, caractérisé en ce que le corps d'atténuation est réalisé sous la forme d'un filtre gris réglable (66).

7. Système selon l'une des revendications 1 à 6, caractérisé en ce que les récepteurs de lumière (E1–8 sur la figure 1, 67 sur la figure 6, E71–75 sur la figure 7) sont fixés chacun dans une broche de connexion (69) dans l'ouverture de sortie de lumière de laquelle est disposée une lentille sphérique (64).

8. Système selon l'une des revendications 1 à 7 caractérisé en ce que les émetteurs de lumière (S1–8 sur la figure 1, S71–75 sur la figure 7) sont disposés de la même manière que les récepteurs de lumière (67 sur la figure 6) dans une broche de connexion (69) munie d'une lentille sphérique (64).

## Claims

1. A transmission system for the multiple bidirectional use of an optical fibre (1; 71) in wavelength multiplex, comprising a plurality of light sources in at least two different wavelength ranges, and a number of broadband light receivers (E1–8; E71–75) which corresponds to the number of light sources, each of said light sources and light receivers being connected to the bidirectionally used optical fibre via wavelength-dependent coupling devices and demultiplexers respectively, characterized in that the light sources (S1–S4; S5–S8; S71–S74) of a given wavelength range are each time connected together, via a non-selective, wavelength-independent coupling device (6; 7; 76) constructed as an optical fibre branch, to a first optical fibre (2; 3; 72) which is each time connected, via the window-selective, wavelength-dependent coupling device (10; 11; 80), to the second bidirectionally usable optical fibre (1; 71), to the other end of which there is connected a further window-selective, wavelength-dependent coupling device (11; 10; 81) which is adapted to the other coupling device, a wavelength-dependent demultipelxer (9; 8; 79) being connected to the output of said demultiplexer which are associated with the individual light source wavelengths there being connected the associated receivers (E1–E4; E5–E8. E71–E75).

2. A system as claimed in Claim 1, characterized in that for the window-selective coupling device (10 and 11, 80 and 81) use is made of an arrangement (Fig. 3) in which a mirror (37) is arranged between two spherical lenses (35 and 36) so as to be inclined with respect to the optical axis (30), which mirror transmits the light rays of one of the wavelength ranges used but reflects the light rays of the other wavelength range used.

3. A system as claimed in Claim 1 or 2, characterized in that for the selective demultiplexer (8 and 9, 79) use is made of a device (Fig. 4) for coupling optical signals of different wavelengths from an optical fibre (44) into a plurality of separate optical fibres (45–48), in said device there being arranged a reflective diffraction grating (42) which is inclined with respect to the optical axis of the beam path (80), a spherical lens (41) being arranged between the ends of the optical fibres (40–48) and the diffraction grating (42).

4. A system as claimed in any one of the Claims 1 to 3, characterized in that each light receiver (E1–8 in Fig. 1, E71–75 in Fig. 7) is preceded by a controllable light attenuation member (Fig. 5, Fig. 6) in which an accurately adjustable attenuation element (56, 66) is arragend in the beam path (55, 65) between two spherical lenses (53, 54).

5. A system as claimed in Claim 4, characterized in that the attenuation element is constructed as a pin (56) whose end which protrudes into the beam path (55) is pointed or rounded.

6. A system as claimed in Claim 4, characterized in that the attenuation element is constructed as an adjustable grey filter (66).

7. A system as claimed in any one of the Claims 1 to 6, characterized in that each of the light receivers (E1–8 in Fig. 1, 67 in Fig. 6, E71–75 in Fig. 7) is secured in a connector pin (69), a spherical lens (64) being arranged in the light exit aperture thereof.

8. A system as claimed in any one of the Claims 1 to 7, characterized in that the light sources (S1–8 in Fig. 1, S71–75 in Fig. 7) are arragend in a connector pin (69) including a spherical lens (64) in the same way as the light receivers (67 in Fig. 6).

FIG.1

FIG. 2

FIG. 3

42
43b
43a
41
40
48
47
46
44
45

FIG. 4

FIG.5

51 55 56 52 53 54

FIG.6

61 65 66 69 68 63 64 67

# FIG.7